# EUROPÄISCHE PATENTANMELDUNG

(11) **EP 4 112 196 A1**
(43) Veröffentlichungstag der Anmeldung: **04.01.2023**
(21) Anmeldenummer: 21183164.9
(22) Anmeldetag: 01.07.2021
(51) Int. Cl.: B09B 3/00, C01C 1/24, C01F 11/18, C01F 11/46

(54) **VERFAHREN ZUR SULFATENTFERNUNG AUS SULFATHALTIGEN KARBONISATEN**

(71) Anmelder: Fraunhofer-Gesellschaft zur Förderung der angewandten Forschung e.V., 80686 München (DE)
(72) Erfinder: THOME, Volker, 70569 Stuttgart (DE); DITTRICH, Sebastian, 70569 Stuttgart (DE); VOGEL, Sebastian, 70569 Stuttgart (DE)
(74) Vertreter: Friese Goeden Patentanwälte PartGmbB

(57) **Zusammenfassung**

Die Erfindung betrifft ein Verfahren zur Sulfatentfernung aus sulfathaltigen Karbonisaten, umfassend die folgenden Schritte: a)Einwirken einer Verbindung X₂CO₃ und/oder XHCO₃, wobei X für NH₄⁺ und ein Alkaliion stehen, auf das sulfathaltige Karbonisat in einem wässrigen Medium und b) Abtrennen des wässrigen Mediums, wobei das wässrige Medium X₂SO₄ enthält, wobei X wie vorstehend definiert ist.

## Beschreibung

Die Erfindung betrifft ein Verfahren zur Sulfatentfernung und gegebenenfalls Rückgewinnung von Calciumsulfat aus sulfathaltigen Karbonisaten. Mit diesem Verfahren ist es möglich, Sulfate aus Karbonisaten selektiv zu entfernen, und zwar unabhängig davon, ob diese intrinsische Bestandteile des pyrolysierten Ausgangsmaterials sind oder prozessbedingt, beispielsweise durch eine Schwefelsäurebehandlung, nachträglich eingetragen wurden.

Karbonisate bezeichnen durch Pyrolyse erhaltene kohlenstoffhaltige Feststoffe verschiedenster Ausgangsmaterialien (z.B. Grünschnitt, unbehandeltes Holz, Gärreste, Verpackungsabfälle, Kunststoffe, Klärschlamm) und werden je nach Kontext auch u.a. als Pflanzenkohle, Biokohle oder Pyrokohle bezeichnet (engl.: biochar/pyrochar). Neben mineralischen Bestandteilen zeichnen sich Karbonisate durch einen Kohlenstoffanteil im Bereich 10-95 Masse-% aus und gelten als vielversprechende "Vertreter" für Negativ-Emissions-Technologien.

Die elementare Zusammensetzung und der klimapositive Effekt der Karbonisate prädestinieren sie als nachhaltigen Sekundär-Rohstoff für Baustoff-technische Anwendungen. Abhängig vom pyrolysierten Ausgangsmaterial und möglicher Nachbehandlungen (insbesondere im Fall von pyrolysiertem Klärschlamm) können Karbonisate jedoch, im Sinne einer baustofflichen Nutzung, unerwünschte Begleitelemente beinhalten. Im Baustoff-technischen Umfeld ist hier insbesondere Schwefel, welcher meist in Form von Sulfat vorliegt, zu nennen.

Sulfate können dabei sowohl intrinsisch durch den pyrolysierten Ausgangsstoff als auch durch eine chemische Nachbehandlung in die Karbonisate eingetragen werden. Letzteres kann insbesondere bei pyrolysiertem Klärschlamm von Bedeutung sein, welcher typischerweise einen erhöhten Phosphatgehalt aufweist. Die deutsche "Verordnung über die Verwertung von Klärschlamm, Klärschlammgemisch und Klärschlammkompost" (AbfKlärV) verlangt in §3 zukünftig eine Abtrennung des Phosphats, was typischerweise durch eine Schwefelsäurebehandlung realisiert wird. Bei diesem Verfahren werden zwangsläufig Sulfate in die Karbonisate eingetragen. Um die Anforderungen moderner Baustoffe zu erfüllen, dürfen Karbonisate einen bestimmten Sulfat-Grenzwert jedoch nicht überschreiten.

Der Einsatz von Karbonisaten in Baustoffen ist bislang nicht großskalig etabliert. Für deren Entsulfatisierung existiert daher zurzeit noch kein technisches Verfahren. Entsprechende Anwendungen und Prozesse gewinnen aber insbesondere im Kontext des Klimaschutzes an Bedeutung.

In anderen Anwendungsfeldern sind jedoch bereits Verfahren zur lokalen Entfernung von Sulfaten beschrieben. In der Kunstrestauration werden mittels Ammoniumcarbonattüchern entsprechende Salze von Freskenoberflächen entfernt. Kürzlich wurde zudem die Entsulfatisierung von Bauschutt mittels Ammoniumcarbonat bzw. Ammoniumbicarbonat sowie die anschließende Rückgewinnung von Calciumsulfat beschrieben (WO 2019/011781 A1 "Verfahren zur Calciumsulfatentfernung aus Calciumsulfathaltigem Bauschutt").

Ausgehend vom Stand der Technik liegt der Erfindung somit die Aufgabe zugrunde, ein Verfahren zur Sulfatentfernung und ggf. Rückgewinnung von Calciumsulfat aus sulfathaltigen Karbonisaten bereitzustellen, das das selektive Entfernen von Sulfaten aus Karbonisaten ermöglicht, unabhängig davon ob diese intrinsischer Bestandteil des pyrolysierten Ausgangsmaterials sind oder prozessbedingt (z.B. durch eine Schwefelsäurebehandlung) nachträglich eingetragen wurden, wobei der Sulfatanteil unterhalb der für Baustoffe relevanten Grenzwerte abgesenkt werden kann.

Die Aufgabe wird erfindungsgemäß durch das Verfahren nach Anspruch 1 gelöst. Bevorzugte Ausführungsformen sind in den abhängigen Ansprüchen angegeben.

Erfindungsgemäß wird ein Verfahren zur Sulfatentfernung aus sulfathaltigen Karbonisaten bereitgestellt, das sich durch die folgenden Schritte auszeichnet:
a) Einwirken einer Verbindung X₂CO₃ und/oder XHCO₃, wobei X für NH₄⁺ und ein Alkaliion, wie Na⁺ oder K⁺ stehen (nachfolgend als "Carbonat-Verbindung" bezeichnet), auf das sulfathaltige Karbonisat in einem wässrigen Medium und
b) Abtrennen des wässrigen Mediums, wobei das wässrige Medium X₂SO₄ enthält, wobei X wie vorstehend definiert ist.

Im Hinblick auf die technische Lehre aus der vorstehend diskutierten WO 2019/011781 A1 war vollkommen überraschend, dass die Sulfatentfernung mit Carbonat-Verbindungnen auch für Karbonisate funktioniert, da diese sich sowohl in ihrer physikalischen als auch chemisch/stofflichen Zusammensetzung grundlegend von dem in der WO 2019/011781 A1 diskutierten Bauschutt unterscheiden. Ein Fachmann würde daher nicht vermuten, dass obiges Verfahren auch für Karbonisate angewendet werden kann. Durch Vergleichsversuche konnte zudem gezeigt werden, dass das erfindungsgemäße Verfahren für Karbonisate sogar besser funktioniert als für Baustoffe. Einerseits können bei sonst unveränderten Parametern geringere Wasservolumina zur Sulfatentfernung eingesetzt werden als in genannter WO-Schrift (200 ml bei Karbonisaten statt 800 ml bei Bauschutt). Andererseits zeigte sich, dass bereits eine geringere Menge Ammonium(bi)carbonat für die Umsetzung ausreichend ist (z.B. 5 g Ammoniumcarbonat bei Karbonisaten statt 10g bei dem Bauschutt Mörtelbruch). Das erfindungsgemäße Verfahren ist zudem nicht auf den Einsatz von Ammoniumcarbonat bzw. Ammoniumbicarbonat beschränkt.

Karbonisate im Sinne der vorliegenden Erfindung bezeichnen durch Pyrolyse erhaltene kohlenstoffhaltige Feststoffe verschiedenster Ausgangsmaterialien (z.B. Grünschnitt, unbehandeltes Holz, Gärreste, Verpackungsabfälle, Kunststoffe, Klärschlamm) und werden je nach Kontext auch u.a. als Pflanzenkohle, Biokohle oder Pyrokohle bezeichnet (engl.: biochar/pyrochar). Neben mineralischen Bestandteilen zeichnen sich Karbonisate im Rahmen dieser Erfindung insbesondere durch einen Kohlenstoffanteil im Bereich 10 Masse-% bis 95 Masse-%, insbesondere 20 Masse-% bis 50 Masse-% aus und gelten als vielversprechende "Vertreter" für Negativ-Emissions-Technologien.

Durch den Zusatz der Carbonat-Verbindungen werden die im Karbonisat enthaltenen, aber unerwünschten Sulfate chemisch aufgeschlossen und die Sulfationen in Lösung überführt. Die Kationen (typischerweise Calciumionen) verbleiben als unlösliche Carbonate im Karbonisat. So können die Sulfationen anschließend durch Fest-Flüssig-Trennung vom Karbonisat abgetrennt werden. Das Verfahren ermöglicht so die selektive Reinigung von sulfatkontaminierten Karbonisaten, wobei dadurch Karbonisate erhalten werden, deren Sulfatrestgehalt unter den für Baustoffe relevanten Grenzwerten liegen, so dass sie als Baustoffe eingesetzt werden können. Dies ist vorteilhaft, da die Karbonisate nach dieser Behandlung als nachhaltige und klimafreundliche Sekundärrohstoffe in Baustoffen eingesetzt werden können. Hierdurch kann die CO₂-Bilanz etablierter Baustoffe wie z.B. Beton gesenkt werden. Durch den reduzierten Einsatz von Primärrohstoffen und durch die Verwertung von Reststoffströmen wird zudem die Ressourceneffizienz gesteigert.

Die nach dem erfindungsgemäßen Verfahren behandelten Karbonisate enthalten unlösliche Carbonate und/oder Hydrogencarbonate, welche mittels chemisch-mineralogischen Analysemethoden (z.B. Röntgenbeugung, Carbonat-Nachweis mit Barytwasser) nachweisbar sind. Unbehandelte Karbonisate enthalten typischerweise keine Carbonate oder Hydrogencarbonate, da sie während des Herstellungsprozesses Temperaturen von mehreren hundert Grad ausgesetzt sind.

Die Sulfatentfernung aus Karbonisaten wird zukünftig von großer Bedeutung in der Recycling- und Aufbereitungsbranche werden und dort insbesondere in der Aufbereitung und Verwertung von Klärschlamm. Klärschlamm ist typischerweise reich an Phosphaten. Diese müssen jedoch gemäß §3 der deutschen "Verordnung über die Verwertung von Klärschlamm, Klärschlammgemisch und Klärschlammkompost" (AbfKlärV) in Deutschland von Reststoffen abgetrennt und in den Stoffkreislauf rückgeführt werden. Dies geschieht typischerweise durch eine Schwefelsäurebehandlung, welche jedoch den Eintrag von Sulfat in die Karbonisate zur Folge hat. Entsprechend behandelte und damit sulfatkontaminierte Karbonisate könnten ohne weitere Behandlung nicht oder nur bedingt in Baustoffen verwendet werden. Die Anwendung von Karbonisaten, insbesondere von pyrolysiertem Klärschlamm, bietet jedoch enormes Potential für die Baustoffindustrie, da Karbonisate als klimafreundlicher und nachhaltiger Sekundärrohstoff gelten.

Dem erfindungsgemäßen Verfahren liegt der Grundgedanke zugrunde, unter Einwirkung der speziellen Carbonat-Verbindungen das in den Bauabfällen enthaltene Calciumsulfat (CaSO₄) in Calciumcarbonat (CaCO₃) umzuwandeln, wobei in dem wässrigen Medium das Sulfat verbleibt. Besonders überraschend war dabei, dass das erfindungsgemäße Verfahren auch mit den Bicarbonaten durchgeführt werden kann.

Konkret können im erfindungsgemäßen Verfahren die folgenden Verbindungen der Formeln X₂CO₃ und XHCO₃ eingesetzt werden:
- Ammoniumhydrogencarbonat (Ammoniumbicarbonat, NH₄HCO₃),
- Ammoniumcarbonat ((NH₄)₂CO₃) ,
- Natriumcarbonat (Na₂CO₃),
- Natriumhydrogencarbonat (Natriumbicarbonat, Soda, NaHCO₃) ,
- Kaliumcarbonat (Pottasche, K₂CO₃)
- Kaliumhydrogencarbonat (Kaliumbicarbonat, KHCO₃)

Ferner können Mischungen von zwei oder mehreren dieser Carbonat-Verbindungen im erfindungsgemäßen Verfahren eingesetzt werden.

Eine Ammoniumbicarbonatlösung kann entweder kommerziell erhalten oder in einfacher Weise durch Ansäuern einer Ammoniumcarbonatlösung mit CO₂ oder durch Einleiten von CO₂ in eine ammoniakalische Lösung hergestellt werden.

In einigen Ausführungsformen ist das sulfathaltige Karbonisat aus Grünschnitt, Holz, Gärresten, Verpackungsmaterialien, Kunststoffen und oder Klärschlamm hergestellt.

In einer weiteren Ausführungsform kann das sulfathaltige Karbonisat einen Kohlenstoffanteil von 10 Masse-% bis 95 Masse-%, beispielsweise 20 Masse-% bis 50 Masse-%, wie 30 Masse-% bis 40 Masse-%, aufweisen.

In einigen Ausführungsformen wird die Carbonat-Verbindung in mindestens stöchiometrischer Menge, bezogen auf den Sulfatgehalt des Karbonisats, eingesetzt. Dazu kann in einem vorgeschalteten Schritt der Sulfatgehalt des Karbonisats in an sich bekannter Weise bestimmt werden, um die stöchiometrische Menge der Carbonat-Verbindung festzustellen. Um einen möglichst vollständigen Austausch von Sulfat- zu Carbonat-Ionen sicherzustellen, ist es günstig, die Menge Carbonat-Verbindung in einem Überschuss bezogen auf die stöchiometrische Menge einzusetzen. Die Obergrenze ist dabei nicht kritisch, sie wird günstigerweise so gewählt, dass zum einen keine unnötige Carbonat-Verbindung eingesetzt und zum anderen aber eine zumindest nahezu vollständige Umsetzung sichergestellt wird.

Im erfindungsgemäßen Verfahren wird ein wässriges Medium eingesetzt. Als wässriges Medium wird dabei insbesondere ein Medium verstanden, das Wasser aufweist und in dem die Carbonat-Verbindung in der für das erfindungsgemäße Verfahren erforderlichen Mengen gelöst werden kann. Als besonders günstiges wässriges Medium wird dabei Wasser eingesetzt, beispielsweise destilliertes Wasser.

Die Menge des wässrigen Mediums kann dabei so gewählt werden, dass zum einen die Carbonat-Verbindungen in ausreichenden Mengen gelöst werden können und ferner das Karbonisat ausreichend bedeckt ist.

Im Schritt a) des erfindungsgemäßen Verfahrens wirkt die Carbonat-Verbindung auf das Karbonisat ein, wobei dieses Einwirken in einem wässrigen Medium, insbesondere Wasser, durchgeführt wird. Dabei ist es nicht kritisch, in welcher Reihenfolge das Karbonisat, die Carbonat-Verbindung und das wässrige Medium zusammengegeben werden. Die Reihenfolge kann also beliebig gewählt werden.

Das Einwirken in Schritt a) kann in einer Ausführungsform der Erfindung über einen Zeitraum von etwa einer Stunde bis zu mehreren Tagen erfolgen. In anderen Ausführungsformen der Erfindung kann das Einwirken über einen Zeitraum von etwa 1 Stunde bis etwa 5 Tagen erfolgen. In wieder einer anderen Ausführungsform kann das Einwirken über etwa 1 Stunde bis etwa 48 Stunden, beispielsweise 24 Stunden bis 36 Stunden erfolgen. In diesem Zeitraum erfolgt eine vollständige Umsetzung von Calciumsulfat zu Calciumcarbonat. Das Einwirken kann bei Raumtemperatur erfolgen.

Um die vollständige Umsetzung zu erleichtern ist es günstig, wenn im Schritt a) die im wässrigen Medium enthaltenen Komponenten durch Bewegung miteinander in Kontakt gebracht und vermischt werden können. Dies kann beispielsweise durch ein übliches Rühren oder Schütteln, wie es in Laboratorien und technischen Anlagen durchgeführt wird, erfolgen.

Im Schritt b) erfolgt das Abtrennen des wässrigen Mediums mit den darin gelösten Substanzen, insbesondere dem darin gelösten Sulfat, das aus dem im Karbonisat enthaltenen Sulfat gebildet wird. In einigen Ausführungsformen kann dieses Abtrennen im Schritt b) durch Fest-Flüssig-Trennung erfolgen, beispielsweise Filtration, Sedimentation und/oder Zentrifugation. Auf diese Weise kann eine flüssige Phase erhalten werden, welche das Sulfat enthält. Ggf. kann nach dem Abtrennen der wässrigen Phase der verbleibende Filterrückstand getrocknet werden.

Als fester Rückstand (z.B. Filterkuchen) wird sulfatfreies Karbonisat erhalten, welche z.B. für Baustoffanwendungen weiterverwendet werden kann. Als flüssiger Rückstand (z.B. Filtrat) wird eine sulfathaltige Lösung erhalten, welche zum Beispiel als Düngemittel oder zur Gewinnung von Calciumsulfaten (Gips, Hemihydrat, Anhydrit) genutzt werden kann. Hierfür kann der flüssige Rückstand mit einer geeigneten Menge eines Calciumsalzes, z.B. Calciumoxid (CaO), Calciumhydroxid (Ca(OH)₂), Calciumchlorid (CaCl₂), Calciumcarbonat (CaCO₃) oder einer Kombination hieraus versetzt werden.

Das beispielsweise durch Filtration abgetrennte, sulfathaltige wässrige Medium kann direkt weiterverwendet werden, um daraus Düngemittel herzustellen.

Alternativ dazu kann das sulfathaltige wässrige Medium dazu verwendet werden, daraus mit Hilfe von Calciumträgern, insbesondere Calciumcarbonat, Freikalk, Calciumchlorid oder Portlandit, Calciumsulfat mit einem hohen Reinheitsgrad herzustellen. Es wird davon ausgegangen, dass in einigen Jahren ein Mangel an Gips herrschen wird. Beispielsweise ist davon auszugehen, dass der aus der Rauchgasentschwefelung gewonnene Gips als Gipsquelle in nicht allzu ferner Zukunft entfallen wird, da die Stein- und Braunkohlegewinnung wohl zurückgedrängt werden wird. Durch die Rückgewinnung von Gips aus dem sulfathaltigen wässrigen Medium kann somit eine weitere in Zukunft wohl benötigte Gipsquelle erschlossen werden.

Die Rückgewinnung von Gips kann in einer Ausführungsform dadurch ermöglicht werden, dass einer der vorstehenden Calciumträger zum sulfathaltigen wässrigen Medium zugegeben und die Temperatur auf etwa 18 °C bis etwa 100 °C oder, auf etwa 58 °C bis etwa 100 °C eingestellt wird. Dabei fällt Gips aus der Lösung aus und das in der Lösung verbleibende Ammoniumcarbonat zersetzt sich wieder in die Gase Ammoniak und Kohlendioxid. Diese können in einer wässrigen Lösung aufgefangen und dem Prozess in Schritt a) zugeführt werden.

Alternativ kann zu dem sulfathaltigen wässrigen Medium, das den Calciumträger aufweist, Schwefelsäure zugesetzt werden, um CO₂ auszutreiben und den im Calciumträger enthaltenen Calciumanteil in Gips umzuwandeln. Dabei erhält man reine Calciumsulfate ohne eine wie oben beschriebene thermische Behandlung.

Zudem kann eine zusätzliche Behandlung (Ansäuern) der Lösung sicherstellen, dass das ausgefällte Calciumsulfat das von Eurogypsum empfohlene Qualitätskriterium von < 1,2 Gew.-% CaCO₃ erfüllt.

Aufgrund der vorliegenden Erfindung ist es also möglich, sulfathaltige Karbonisate derart aufzubereiten, dass der Sulfatgehalt unterhalb der vorgegebenen Grenzwerte gesenkt werden kann. Dies ist eine Grundvoraussetzung dafür, dass Karbonisate als Baustoffe eingesetzt werden dürfen. Durch das erfindungsgemäße Verfahren werden Deponieflächen geschont, Deponiekosten gesenkt sowie die Ressourceneffizienz gesteigert.

Nachfolgend soll die Erfindung anhand von Figuren und Ausführungsbeispielen ohne Beschränkung des allgemeinen Erfindungsgedankens erläutert werden. Dabei zeigt

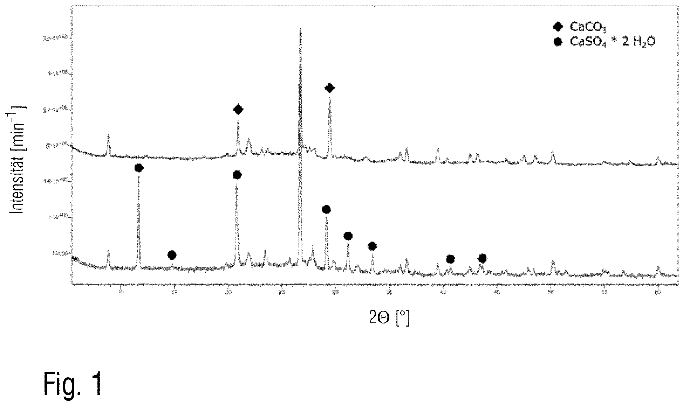

Figur 1 ein Röntgenbeugungsdiffraktogramm eines unbehandelten sulfathaltigen Karbonisats und eines nach dem erfindungsgemäßen Verfahren behandelten sulfatfreien Karbonisats.

### Beispiele

### Beispiel 1:

Es werden 20 g sulfathaltige Klärschlammkohle und 6,5 g Kaliumcarbonat (K₂CO₃) in einen Kolben gegeben. Es werden 200 ml Wasser hinzugefügt und der Kolbeninhalt auf einer Schüttelplatte für 24 h durchmischt.

### Beispiel 2:

Es werden 20 g sulfathaltige Klärschlammkohle und 4 g Natriumhydrogencarbonat (NaHCO₃) in einen Kolben gegeben. Es werden 200 ml Wasser hinzugefügt und der Kolbeninhalt auf einer Schüttelplatte für 24 h durchmischt.

### Beispiel 3:

Es werden 20 g sulfathaltige Klärschlammkohle und 3,6 g Ammoniumhydrogencarbonat (NH₄HCO₃) in einen Kolben gegeben. Es werden 200 ml Wasser hinzugefügt und der Kolbeninhalt auf einer Schüttelplatte für 36 h durchmischt.

### Beispiel 4:

Es werden 20 g sulfathaltige Klärschlammkohle und 5 g Natriumcarbonat (Na₂CO₃) in einen Kolben gegeben. Es werden 200 ml Wasser hinzugefügt und der Kolbeninhalt auf einer Schüttelplatte für 12 h durchmischt. Die Suspension wird filtriert und das Filtrat wird mit einer wässrigen CaCl₂-Lösung versetzt, um Calciumsulfat in Form von Gips zurückzugewinnen.

### Beispiel 5:

Es werden 20 g sulfathaltige Klärschlammkohle und 5 g Ammoniumcarbonat (NH₄CO₃) in einen Kolben gegeben. Es werden 200ml Wasser hinzugefügt und der Kolbeninhalt auf einer Schüttelplatte für 24 h durchmischt.

In Figur 1 ist ein Röntgenbeugungsdiffraktogramm einer unbehandelten Probe, wie sie in Beispiel 5 als Ausgangsmaterial eingesetzt wurden. Es ist deutlich zu erkennen, dass diese Probe einen hohen Sulfatanteil enthält (vgl. Fig. 1, unten). Nach Durchführung des erfindungsgemäßen Verfahrens war kein Sulfat mehr enthalten (vgl. Fig. 1, oben).

Es konnte nachgewiesen werden, dass das Sulfat im Karbonisat fast vollständig entfernt wurde.

Selbstverständlich ist die Erfindung nicht auf die in den Figuren und Beispielen dargestellten Ausführungsformen zu beschränken. Die vorstehende Beschreibung ist daher nicht als beschränkend, sondern als erläuternd anzusehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Merkmale aus unterschiedlichen Ausführungsformen der Erfindung können jederzeit kombiniert werden, um so weitere Ausführungsformen der Erfindung zu erhalten.

## Patentansprüche

1. Verfahren zur Sulfatentfernung aus sulfathaltigen Karbonisaten, **gekennzeichnet durch** die folgenden Schritte:
a) Einwirken einer Verbindung X₂CO₃ und/oder XHCO₃, wobei X für NH₄⁺ und ein Alkaliion stehen, auf das sulfathaltige Karbonisat in einem wässrigen Medium und
b) Abtrennen des wässrigen Mediums, wobei das wässrige Medium X₂SO₄ enthält, wobei X wie vorstehend definiert ist.

2. Verfahren nach Anspruch 11, **dadurch gekennzeichnet, dass** das sulfathaltiges Karbonisat aus Grünschnitt, Holz, Gärreste, Verpackungsabfällen, Kunststoffe und/oder Klärschlamm hergestellt wurde.

3. Verfahren nach Anspruch 1 oder 2 **dadurch gekennzeichnet, dass** das sulfathaltige Karbonisat einen Kohlenstoffanteil von etwa 10 Masse-% bis etwa 95 Masse-% oder von etwa 20 Masse-% bis etwa 50 Masse-% aufweist.

4. Verfahren nach einem der Ansprüche 1 bis 3, **dadurch gekennzeichnet, dass** die Verbindung X₂CO₃ und/oder XHCO₃ in mindestens stöchiometrischer Menge bezogen auf den Sulfatgehalt des sulfathaltigen Karbonisats eingesetzt wird.

5. Verfahren nach einem der Ansprüche 1 bis 4, **dadurch gekennzeichnet, dass** als wässriges Medium Wasser eingesetzt wird.

6. Verfahren nach einem der Ansprüche 1 bis 5, **dadurch gekennzeichnet, dass** das Einwirken in Schritt a) über einen Zeitraum von etwa 1 Stunde bis etwa 5 Tagen oder von etwa 1 Stunde bis etwa 48 Stunden oder von etwa 24 Stunden bis etwa 36 Stunden erfolgt.

7. Verfahren nach einem der Ansprüche 1 bis 6, **dadurch gekennzeichnet, dass** das Abtrennen in Schritt b) durch Fest-Flüssig-Trennung erfolgt.

8. Verfahren nach Anspruch 7, **dadurch gekennzeichnet, dass** die Fest-Flüssig-Trennung durch Filtration, Sedimentation und/oder Zentrifugation erfolgt.

9. Verfahren nach einem der Ansprüche 1 bis 8, **dadurch gekennzeichnet, dass** es den weiteren Schritt umfasst:
c) Rückgewinnen von Calciumsulfat aus dem X₂SO₄-haltigem wässrigen Medium.

10. Verfahren nach Anspruch 9 **dadurch gekennzeichnet, dass** das Rückgewinnen dadurch erfolgt, dass ein Calciumträger zu dem X₂SO₄-haltigen wässrigen Medium gegeben und die so erhaltene Mischung bei einer Temperatur von etwa 18 °C bis etwa 100 °C oder von etwa 58 °C bis etwa 100 °C behandelt wird.

11. Verfahren nach Anspruch 9, **dadurch gekennzeichnet, dass** das Rückgewinnen dadurch erfolgt, dass ein Calciumträger zu dem X₂SO₄-haltigen wässrigen Medium gegeben und zu der so erhaltenen Mischung Schwefelsäure zugegeben wird.

12. Verfahren nach einem der Ansprüche 10 oder 11, **dadurch gekennzeichnet, dass** als Calciumträger Calcit, Freikalk, Calciumchlorid, Portlandit und/oder eine Mischung von mindestens zwei dieser Verbindungen eingesetzt wird.
